# EUROPÄISCHE PATENTANMELDUNG

(11) **EP 3 599 705 A1**
(43) Veröffentlichungstag der Anmeldung: **29.01.2020**
(21) Anmeldenummer: 19187783.6
(22) Anmeldetag: 23.07.2019
(51) Int. Cl.: H02K 3/52

(54) **KONTAKTRING FÜR EINEN STATOR EINES ELEKTROMOTORS**

(30) Priorität: 27.07.2018 DE 102018118280
(71) Anmelder: Valeo Siemens eAutomotive Germany GmbH, 91056 Erlangen (DE)
(72) Erfinder: FINGER-ALBERT, Christian, 97688 Bad Kissingen (DE); OETZEL, Stefan, 98574 Schmalkalden (DE); MENZ, Michael, 97618 Hollstadt (DE); BALLING, Florian, 97616 Bad Neustadt (DE)
(74) Vertreter: Dr. Gassner & Partner mbB

(57) **Zusammenfassung**

Kontaktring (1) für einen Stator (72) eines Elektromotors, wobei der Kontaktring (1) drei Ebenen aufweist:
- eine erste Ebene mit mindestens einem ersten Leiter (17);
- eine zweite Ebene (5) aus elektrisch isolierendem Material;
- eine dritte Ebene mit mindestens einem zweiten Leiter (51, 52, 53, 54, 55, 56);
- mindestens eine erste und eine zweite Durchführung (11, 13, 15) durch die zweite Ebene (5),
wobei die erste Durchführung (13, 15) kleiner als die zweite Durchführung (11) ist und in der ersten Durchführung (13, 15) Spulendrähte einer Spule und in der zweiten Durchführung (11) Spulendrähte mindestens zweier Spulen geführt werden.

## Beschreibung

Die Erfindung betrifft einen Kontaktring für einen Stator eines Elektromotors.

### Stand der Technik

Elektromotoren sind allgemein bekannt und finden zunehmend Anwendung für den Antrieb von Fahrzeugen. Ein Elektromotor besteht aus einem Stator und einem Rotor.

Der Stator umfasst eine Vielzahl von Nuten, in denen die Windungen geführt werden. Im Wicklungskopf laufen die Windungen zusammen und werden verbunden. Um diese Verbindung einfach herzustellen sind sogenannte Kontaktringe oder Verschaltungsplatten bekannt.

Eine solche Verschaltungsplatte ist in DE 10 2015 200 089 B4 gezeigt. Diese Verschaltungsplatte weist axiale Abstandshalter auf, die sich direkt an der Stirnfläche des Stators abstützen können.

Aus der EP 2 959 564 B1 ist ein Kontaktring bekannt, der jeweils ein Spulenende mit den Spulenenden von zwei anderen Phasen unter Bildung eines Sternpunktes verbindet.

### Aufgabe und Lösung

Aufgabe der vorliegenden Erfindung ist es, einen Kontaktring zu verbesser.

Gelöst wird diese Aufgabe durch einen Kontaktring gemäß dem Hauptanspruch. Weitere vorteilhafte Ausgestaltungen sind Gegenstand der abhängigen Ansprüche.

Erfindungsgemäß weist der Kontaktring für einen Stator eines Elektromotors drei Ebenen auf, eine erste Ebene mit mindestens einem ersten Leiter, eine zweite Ebene aus elektrisch isolierendem Material, eine dritte Ebene mit mindestens einem zweiten Leiter, mindestens eine erste und eine zweite Durchführung durch die zweite Ebene, wobei die erste Durchführung kleiner als die zweite Durchführung ist und in der ersten Durchführung Spulendrähte einer Spule und in der zweiten Durchführung Spulendrähte mindestens zweier Spulen geführt werden.

Bei den Spulendrähten kann es sich beispielsweise auch um Spulendrahtenden handeln.

Die ersten Durchführungen können Spulendrähte von einer Spule aufnehmen, wobei die größeren zweiten Durchführungen die Spulendrähte von zwei Spulen aufnehmen können. In den zweiten Durchführungen kann somit bereits innerhalb der Durchführung eine Kontaktierung von zwei Spulendrähten von zwei verschiedenen Spulen vorgenommen werden.

Bei den ersten Leitern kann es sich um Sternpunktleiter handeln, die die Spulendrahtenden in den ersten Durchführungen elektrisch verbinden.

Bei den zweiten Leitern kann es sich um Phasenleiter handeln, die Spulendrahtenden von mindestens zwei Spulen in den zweiten Durchführungen mit Spulendrahtenden von mindestens zwei weiteren Spulen in einer weiteren zweiten Durchführung verbinden.

Die Anordnung der ersten und zweiten Leitern auf unterschiedlichen Seiten des isolierenden Materials führ zu einem kompakten Aufbau des Kontaktrings.

Bevorzugt kann mindestens ein zweiter Leiter aufrecht auf dem Kontaktring stehen.

Der zweite Leiter weist dabei eine Höhe auf, die größer als seine Breite ist.

In einer weiteren Ausgestaltung der Erfindung können die Spulendrähte in gecrimpten Hülsen in den Durchführungen geführt werden.

Durch das Krimpen der Spulendrahtenden in den Hülsen kann die Isolierung der einzelnen Drähte im Drahtbündel überwunden werden. Dadurch kann eine leitende Verbindung über die Hülse zwischen den Spulendrahtenden und dem Leiter hergestellt werden.

Weiter bevorzugt können die Spulendrähte an den ersten oder zweiten Leiter geschweißt sein.

Durch das Schweißen ist eine leitende Verbindung möglich, die gleichzeitige ausreichend mechanische Stabilität aufweist.

In einer weiteren Ausgestaltung kann mindestens ein erster Leiter in Richtung der zweiten Leitern eine Verlängerung aufweisen und diese Verlängerung kann durch die erste Durchführung geführt sein.

Die Verlängerung des ersten Leiters durch die ersten Durchführungen ermöglicht ein Kontaktieren von sowohl den ersten Leitern als auch den zweiten Leitern mit dem Ende der Spulendrähte oder der Hülsen auf der gleichen Seite des Kontaktrings. Die ersten Leitern werden dabei mit den Spulendrahtenden in den ersten Durchführungen und die zweiten Leitern mit den Spulendrahtenden von jeweils zwei Spulen in den zweiten Durchführungen verbunden. Dies ist besonders hilfreich, wenn der Kontaktring auf den Stator aufgesetzt wird und die Spulendrähte so kurz wie möglich sein sollen. Eine Kontaktierung ist dann auf der dem Stator abgewandten Seite einfachen möglich.

Bevorzugt kann die zweite Ebene mindestens eine Halterung für die zweiten Leitern aufweisen.

Bei der Halterung kann es sich um eine Clip-in-Halterung handeln, in die ein Leiter von oben hereinführbar ist und der Leiter dann durch eine variable Nase gehalten wird.

Die zweiten Leitern können durch die Halterungen beispielsweise erst nach dem Kontaktieren der ersten Leitern mit den entsprechenden Spulendrahtenden auf dem Kontaktring aufgebracht werden.

Weiter bevorzugt kann der Kontaktring mindestens ein Abstützelement aufweisen, das in Wirkverbindung mit dem Stator oder einer Statorendscheibe des Stators steht.

Dieses Abstützelement stellt beispielsweise einen definierten Abstand zum Kern des Stator her. Zusätzlich verleiht das Abstützelement dem Kontaktring Halt für die Kontaktierung der Spulendrahtenden oder Hülsen.

In einer weiteren bevorzugten Ausgestaltung der Erfindung kann sich der zweite Leiter von einem Stromanschlusspunkt zu einem weiteren Stromanschlusspunkt im Querschnitt verjüngen oder einen Querschnittsprung aufweisen.

Der Querschnitt des zweiten Leiters hängt von dem zu leitenden Strom ab und kann beispielsweise von einem ersten Stromanschlusspunkt zu einem zweiten Stromanschlusspunkt einen größeren Querschnitt aufweisen als von diesem zweiten Stromanschlusspunkt zu einem dritten Stromanschlusspunkt. Der Wechsel des Querschnitts kann sprunghaft oder kontinuierlich verlaufen.

Beim ersten Stromanschlusspunkt kann es sich um eine Schnittstelle zum Inverter und beim zweiten und dritten Stromanschlusspunkt um einen Kontaktpunkt zu jeweils zwei Spulendrahtenden oder Hülsen in einer zweiten Durchführung handeln.

Bevorzugt kann die erste Ebene einen größeren Abstand zum Stator aufweisen als die dritte Ebene und die zweite Ebene zwischen der ersten und dritten Ebene angeordnet sein.

Die dritte Ebene ist nach dem Aufsetzen des Kontaktrings auf den Stator besser als die erste Ebene zugänglich, und beispielsweise ein Kontaktieren der Spulendrahtenden mit den Hülsen oder Leitern ist dort einfacher als auf der ersten Ebene möglich.

Der Kontaktring kann somit beispielsweise auf den Stator aufgesetzt sein und eine Kontaktierung erst nach dem Aufsetzen auf der dem Stator abgewandten Seite des Kontaktrings erfolgen.

Die ersten Leitern transportieren in einer Ausgestaltung der Erfindung einen geringeren Strom als die zweiten Leitern und haben daher einen kleineren Querschnitt als die zweiten Leitern. Die ersten Leitern können somit flach, also die Breite der Leitern ist größer als ihre Höhe, auf dem Kontaktring angeordnet werden.

In einer weiteren Ausgestaltung der Erfindung kann der Kontaktring eine weitere Ebene aufweisen. Die weitere Ebene kann beispielsweise unterhalb der ersten Ebene in Richtung des Stator liegen und dadurch eine elektrische Isolation zwischen Stator und erster Ebene erhöhen.

In einer weiteren Ausgestaltung der Erfindung können der Kontaktring und der Stator mit einem Vergussmaterial vergossen sein. Der Stator ist dadurch vor Feuchtigkeit geschützt.

Erfindungsgemäß weist ein Fahrzeug einen Kontaktring für einen Stator eines Elektromotors gemäß einer der bevorzugten Ausgestaltungen auf.

### Figurenbeschreibung

Figur 1 zeigt eine Draufsicht auf einen Kontaktring.
Figur 2 zeigt die Sternpunktebene eines Kontaktrings.
Figur 3 zeigt einen Querschnitt durch einen Kontaktring.
Figur 4 zeigt zwei Ausführungsformen eines Sternpunktleiters.
Figur 5 zeigt eine weitere Ansicht eines Kontaktrings.
Figur 6 zeigt die Phasenebene eines Kontaktrings.
Figur 7 zeigt zwei Ausführungsformen eines Phasenleiters.
Figur 8 zeigt eine weitere Ausführungsform eines Kontaktrings.
Figur 9 zeigt eine Statorendscheibe.
Figur 10 zeigt ein Fahrzeug mit einem Elektromotor und einem Kontaktring

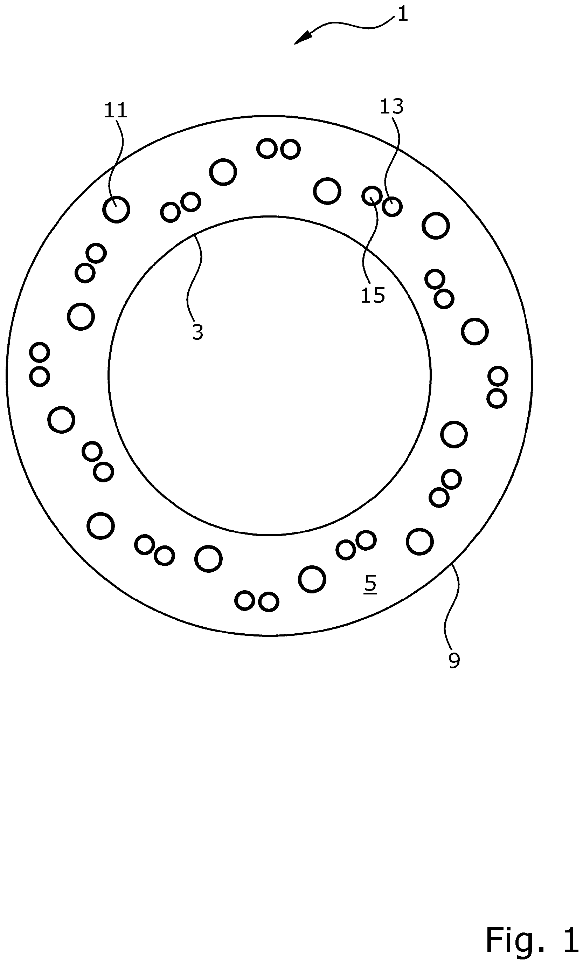

Figur 1 zeigt einen Kontaktring 1 mit einem Außendurchmesser 9 und einem Innendurchmesser 3. Der Kontaktring 1 weist eine Vielzahl von Durchführungen 11, 13, 15 auf. Die ersten Durchführungen 13, 15 weisen einen ersten Durchmesser und die zweiten Durchführungen 11 einen zweiten Durchmesser auf. In den ersten Durchführungen 13, 15 befinden sich Spulendrahtenden von jeweils einer Spule und in den größeren zweiten Durchführungen 11 befinden sich die Spulendrahtenden von zwei Spulen. In den zweiten Durchführungen 11 sind somit bereits zwei Spulendrahtenden kontaktiert worden.

Die durchgängige zweite Ebene 5 aus isolierendem Material verleiht dem Ring 1 seine Stabilität.

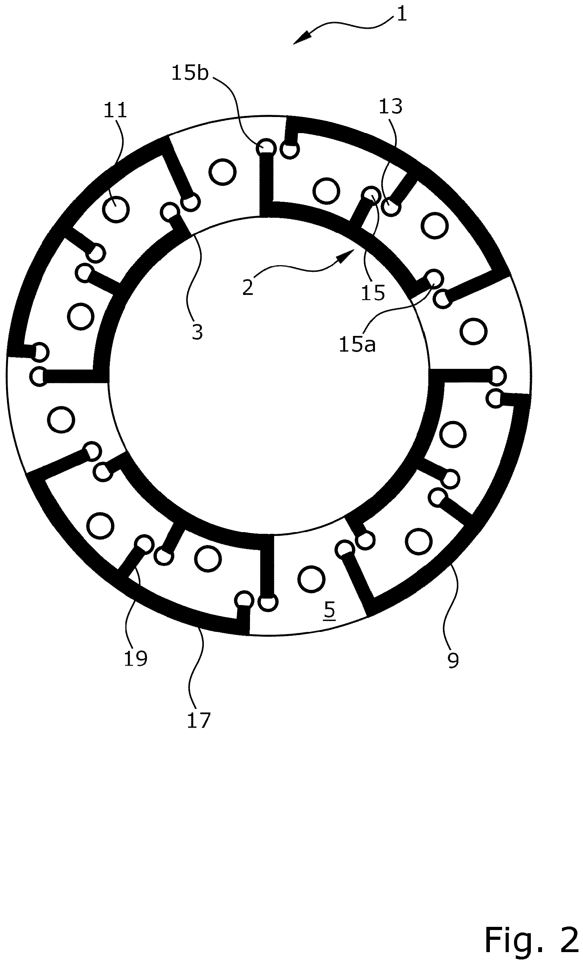

Figur 2 zeigt die erste Ebene als eine unter Ansicht oder eine transparente Innenansicht des Kontaktrings 1. Die erste Ebene ist beispielsweise eine Sternpunktebene.

Ausgewählte erste Durchführungen 13, 15 sind jeweils mit leitenden Abschnitten 17 über leitende Stege 19 verbunden, die jeweils als erste Leiter oder Sternpunktleiter 2 fungieren. Jeweils drei erste Durchführungen 15, 15a, 15b sind durch jeweils einen Sternpunktleiter 2 als Sternpunkt leitend verbunden. Die leitenden Abschnitte 17 befinden sich an der Außen- 9 oder Innenseite 3 des Kontaktringes 1 und weisen einen Verbindungssteg 19 zu den Durchführungen 13, 15 auf. Dadurch wird ein maximaler Abstand für die Isolation zwischen verschiedenen Sternpunktleitern 2 erreicht.

In Figur 2 ist des Weiteren ersichtlich, dass nur jeweils drei der ersten Durchführungen 15, 15a, 15b miteinander durch einen Sternpunktleiter 2 verbunden sind. Dadurch sind drei Spulendrahtenden oder Hülsen zu einem Sternpunkt verbunden. Die zweiten Durchführungen 11, die jeweils die Spulendrahtenden von zwei Spulen aufnehmen können, sind durch die Sternpunktverbinder 2 nicht verbunden.

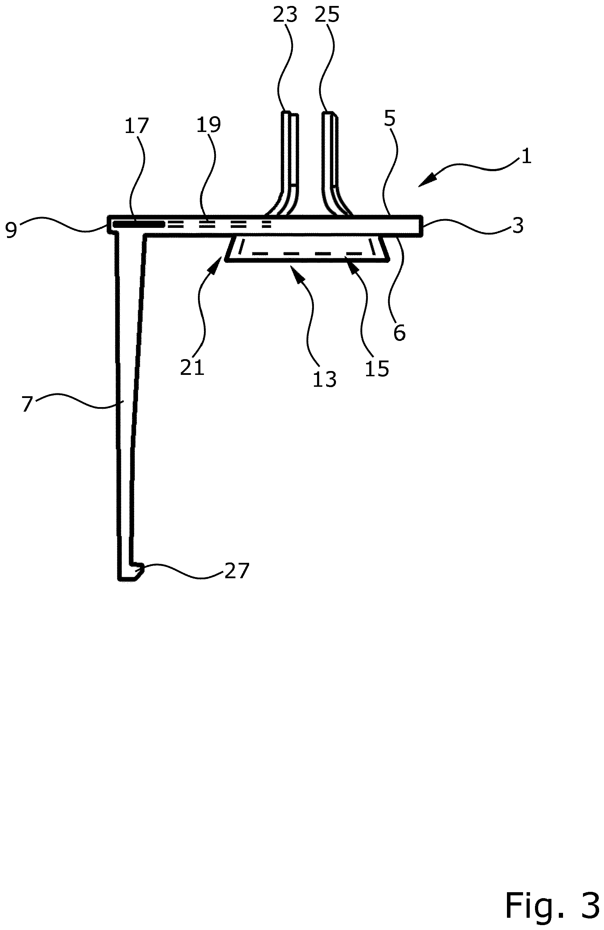

Figur 3 zeigt einen Querschnitt durch einen Kontaktring 1. In der Ausführungsform der Figur 3 befindet sich die Sternpunktebene in der Mitte des Kontaktringes 1. Oberhalb der Sternpunktebene befindet sich die zweite Ebene 5 als Isolation zwischen erster und dritter Ebene. Unterhalb der Sternpunktebene befindet sich eine Zusatzebene 6, die ebenfalls aus elektrisch isolierendem Material besteht. Die drei Ebenen, also zweite Ebene 5, erste Ebene (Sternpunktebene) und Zusatzebene 6 können durch Umspritzen der Sternpunktleiter 2 der ersten Ebene mit elektrisch isolierendem Material gebildet werden.

In Figur 3 ist des Weiteren eine erste Durchführung 13 gezeigt, die die Spulendrahtenden einer Spule mit oder ohne Hülse aufnehmen kann. Hinter der Durchführung 13 liegt eine weitere Durchführung 15, die durch eine gestrichelte Linie angedeutet ist. Die Durchführungen 13, 15 sind in Richtung eines Stators aufgeweitet 21. Dies ermöglicht ein leichteres Einführen der Spulendrahtenden mit oder ohne Hülse in die Durchführungen 13, 15. Die leitenden Abschnitte 17 befinden sich beispielsweise an der Außenkante 9 des Kontaktringens 1 und führen über einen Steg 19 nach innen zur Durchführung 13, 15 von wo aus die Stege 19 der leitenden Abschnitte 17 nach oben gebogen sind. An diesen nach oben gebogen Abschnitten 23, 25 können beispielsweise die Spulendrahtenden befestigt werden. Dies kann beispielsweise durch Anschweißen des Drahtes, durch Versehen der Drähte mit einer darauf gecrimpten Endhülse und das Verschweißen der Endhülse oder ähnliche fachmännische Befestigung erfolgen. Ebenso ist denkbar, dass die Hülse bereits Bestandteil des gebogenen Abschnittes 23, 25 ist und dass die Spulendrahtenden direkt in die Hülse eingeführt und erst dann vercrimpt werden. Beim Crimpen wird ein elektrischer Kontakt zwischen den Spulendrahtenden und der Hülse hergestellt. Die elektrische Isolation der Spulendrahtenden wird somit aufgehoben.

Der Kontaktring 1 weist an der Außenkante 9 einen Stützsteg 7 auf, der das Abstützen des Kontaktringes 1 auf dem Stator entweder direkt oder mittels beispielsweise einer Statorendscheibe ermöglicht. Der Stator oder die Statorendscheibe kann ferner eine Nut oder Aufnehmung aufweisen in dem zur Verbesserung der Stabilität eine Nase 27 des Haltesteges 7 eingreifen kann.

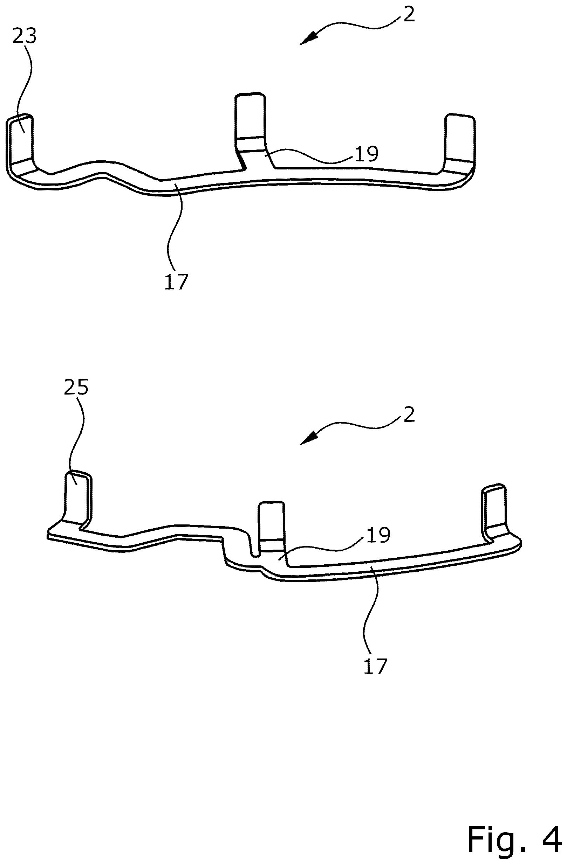

Figur 4 zeigt zwei Ausführungsbeispiele der Sternpunktleiter 2. Die Sternpunktleiter 2 bestehen aus einem leitendem Abschnitt 17, einem leitenden Steg 19 und einem leitenden gebogenen Abschnitt 23, 25. Der Abschnitt 17 kann an der Außenkante des Kontaktringes 1 geführt werden. Als Verbinder zu den Durchführungen fungiert der Steg 19. Der Steg ist nach oben gebogenen und durchstößt mit dem nach oben gebogenen Abschnitt 23, 25 die Durchführung.

Die Sternpunktleiter 2 können entweder von unten durch den Kontaktring 1 durchgesteckt werden oder sie sind bereits mit dem isolierendem Material umspritzt und liegen dann innerhalb des Kontaktringes 1 zwischen der zweiten Ebene 5 und der Zusatzebene 6. Im Ausführungsbeispiel des umspritzten Sternpunktleiters befindet sich somit eine zusätzliche elektrisch isolierende Ebene unterhalb der Sternpunktebene, die eine Isolation in Richtung des Stators bewirkt.

Wie die Bezugszeichen 23, 25 zeigen, handelt es sich in Figur 4 um zwei verschiedene Sternpunktleiter 2. Die beiden Sternpunktleiter kreuzen sich in der Sternpunktebene nicht und verbinden verschiedene Spulendrahtenden in den ersten Durchführungen. Somit werden jeweils drei Spulendrahtenden zu einem Sternpunkt verbunden.

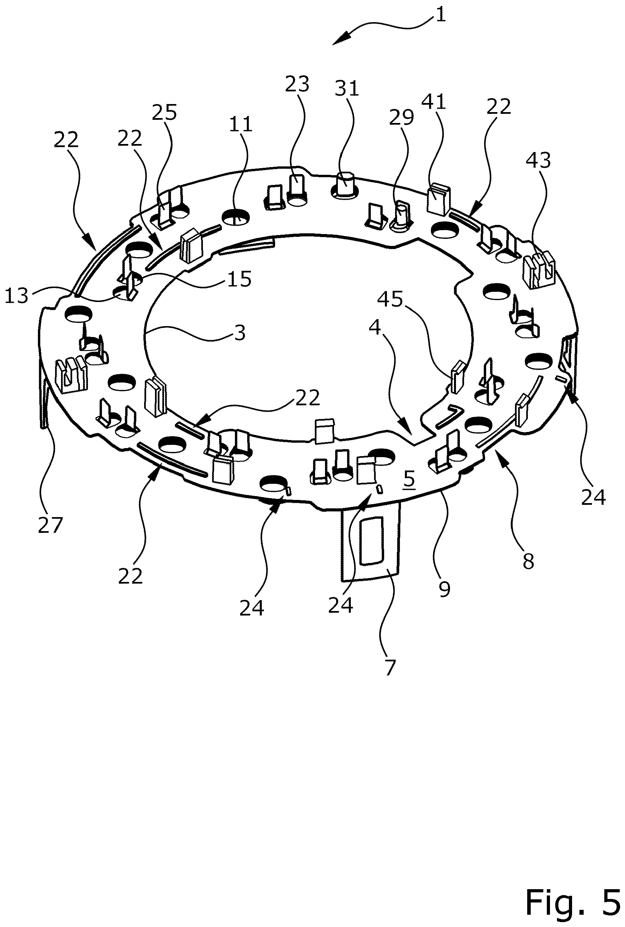

Figur 5 zeigt eine Ansicht eines Kontaktrings 1. Die Sternpunktebene befindet sich unterhalb der Isolationsebene 5. Eine etwaige weitere Isolationsebene als Zusatzebene unterhalb der Sternpunktebene bei umspritzten Sternpunktleitern ist in Figur 5 durch die Draufsicht nicht sichtbar. Die ersten Durchführungen 13, 15 für die Aufnahme der Spulendrahtenden einzelner Spulen sind in ihrem Durchmesser von den Durchführungen 11 für die Aufnahme von Spulendrahtenden zweier Spulen zu unterscheiden. In den Durchführungen 13, 15 für die einzelnen Spulen sind die nach oben gebogenen Abschnitte 23, 25 der Sternpunktleiter zu sehen.

Ferner ist auch beispielhaft das Spulendrahtende einer Spule mit einer aufgecrimpten Sternpunkthülse 29 gezeigt. Ebenso ist eine aufgecrimpte Phasenhülse 31 gezeigt, die über die Spulendrahtenden zweier Spulen gecrimpt und in eine zweite Durchführung 11 eingeführt ist.

Für die Verbindung der Spulendrahtenden in den zweiten Durchführungen 11 mittels eines zweiten Leiters sind auf dem Ring Halterungen 41, 43, 45 vorgesehen. Die Halter sind beispielsweise als Halter 43 zum Halten von zwei Leitern ausgebildet. Ebenso sind Halter 41 vorhanden, die lediglich einen Leiter halten. Desweiteren sind auch Halter 45 vorhanden, die die Leiter lediglich zu einer Seite abstützen. Die Auswahl des richtigen Halters hängt von der Form oder der Position des zweiten Leiters ab.

Des Weiteren sind die Haltestege 7 mit einer Nase 27 für eine Aufnahme auf dem Stator oder auf einer Statorendscheibe ausgebildet. Der Kontaktring 1 weist des Weiteren Ausnehmungen 4, 8 auf, die zu einer Gewichtseinsparung führen.

Auf dem Kontaktring 1 befinden sich Erhebungen 22 aus elektrisch isolierendem Material in der dritten Ebene, also der Phasenebene. Diese Erhebungen 22 ermöglichen einen geringeren Abstand der Phasenleiter zueinander und auch zu den ersten Durchführungen der Sternpunktebene beziehungsweise deren gebogenen Abschnitten 23, 25 oder Spulendrahtenden mit etwaigen Hülsen 29.

Zusätzlich befinden sich auf dem Kontaktring 1 in der dritten Ebene Haltenasen 24 für eine Schnittstelle.

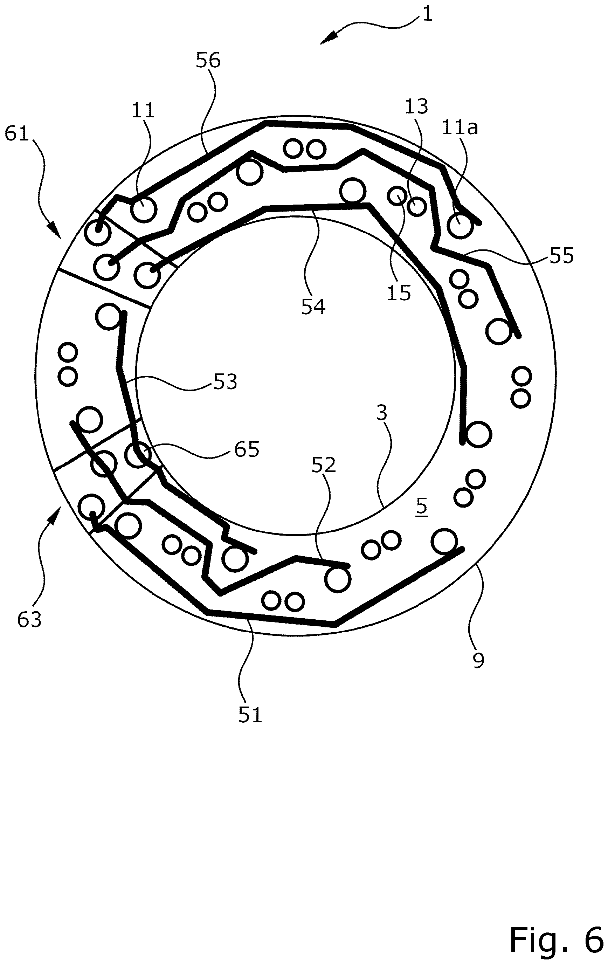

Figur 6 zeigt die dritte Ebene, also die Phasenebene, auf der Oberseite des Kontaktringes 1. Die Spulendrahtenden von zwei Spulen befinden sich zusammen in einer der zweiten Durchführungen 11. Jeweils zwei Durchführungen 11, 11a mit jeweils zwei Spulendrahtenden sind durch einen sogenannten Phasenleiter 56 miteinander verbunden. Die zwei Spulendrahtenden können in einer Hülse, auch Phasenhülse genannt, gecrimpt sein. Die ersten Durchführungen 13, 15 sind durch die zweiten Leitern51, 52, 53, 54, 55, 56, auch Phasenleiter genannt, nicht verbunden, vielmehr sind die Phasenleiter in einem ausreichenden Abstand um diese ersten Durchführungen 13, 15 herumgeführt, um eine elektrische Isolation sicherzustellen. Teile der Phasenleiter 54, 55, 56 sind am Ende mit einer Kontaktschnittstelle 61 verbunden, die eine definierte Schnittstelle zu beispielsweise einem Inverter bereitstellt. Eine weitere Kontaktschnittstelle 63 ist mit den Phasenleitern 51, 52, 53 verbunden, wobei die Phasenleiter 52, 53 in der Mitte also zwischen zwei Kontaktpunkten von Spulendrahtenden mit der Kontaktschnittstelle 63 verbunden sind.

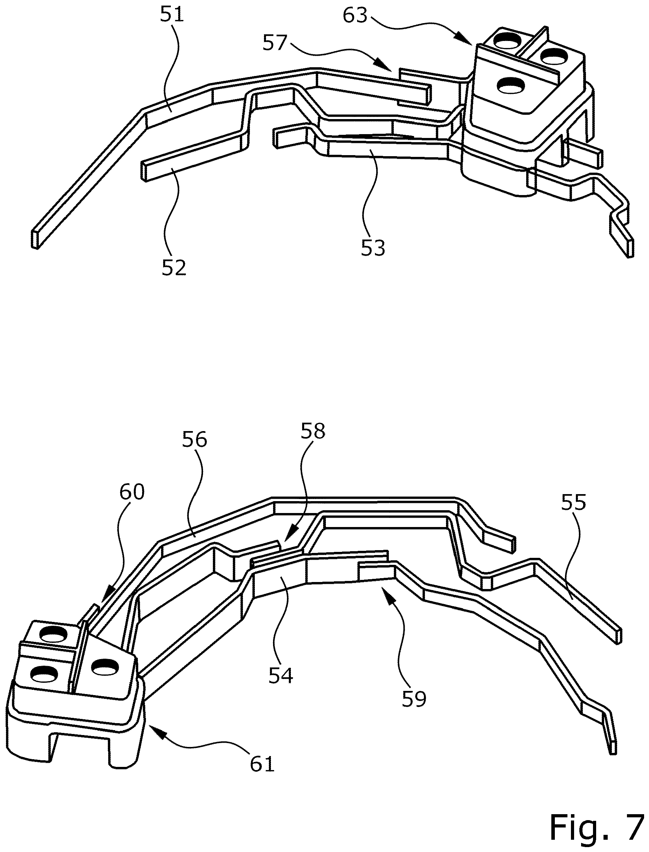

Figur 7 zeigt Ausführungsbeispiele für die Phasenleiter 51, 52, 53, 54, 55, 56 inklusive einer definierten Schnittstelle 61, 63 zum Inverter. Die Phasenleiter sind so gebogen, dass sie zum einen die richtigen Enden der Spulendrahtenden gemäß eines Wicklungsschemas miteinander verbinden und gleichzeitig einen ausreichenden Isolationsabstand zu den anderen Phasenleitern und zu den ersten Durchführungen der Sternpunktebene einhalten.

Die Strombelastung der Phasenleiter ist von einer Kontaktposition des Stromanschlusspunkts mit den Enden der Spulendrahtenden abhängig, sodass der Querschnitt der Phasenleiter und auch die damit verbundene Höhe der Phasenleiter sich unterscheiden. Für die Strecke vom ersten Stromanschlusspunkt bis zum zweiten Stromanschlusspunkt ist der Querschnitt kleiner als für die Strecke vom zweiten Stromanschlusspunkt zur Schnittstelle zum Inverter 61, 63. Der Phasenleiter kann daher einen Sprung 57, 58, 59, 60 der Querschnittsfläche nach dem zweiten Stromanschlusspunkt aufweisen. Es ist auch eine kontinuierliche Verjüngung des Phasenleiters zum von der Schnittstelle 61, 63 entfernten Ende hin möglich.

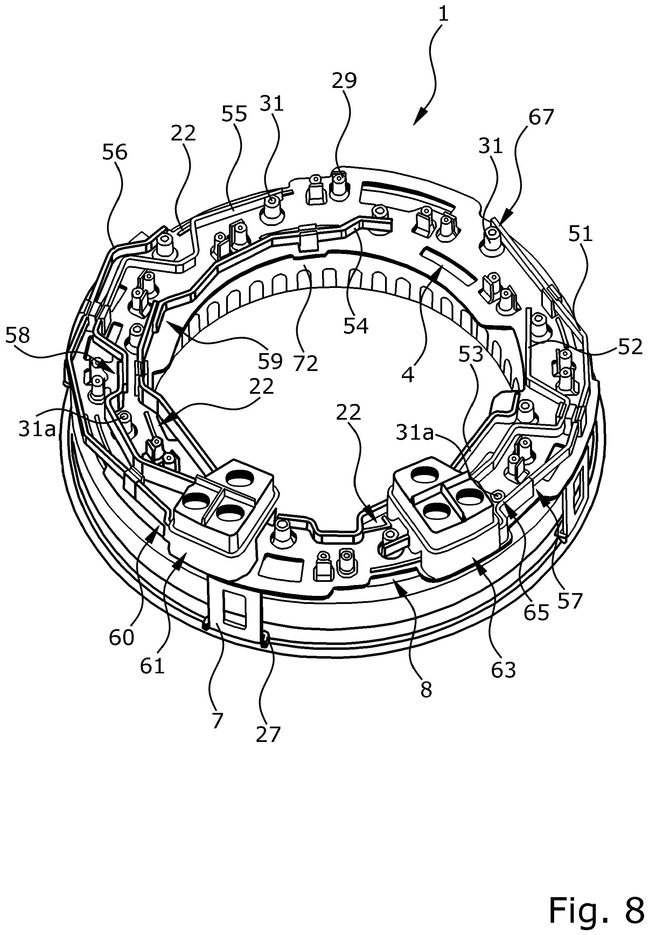

Figur 8 zeigen einen Kontaktring 1 mit sechs zweiten Leitern, bzw. Phasenleitern 51, 52, 53, 54, 55, 56. Die Phasenleiter sind jeweils mit einer Schnittstelle 61, 63 und zwei Hülsen 31, 31a mit Spulendrahtenden von jeweils zwei Spulen verbunden.

Beispielsweise ist ein Phasenleiter 51 mit der Schnittstelle 63 verbunden. Von der Schnittstelle 63 aus verläuft der Phasenleiter 51 mit einem ersten Querschnitt zum Stromanschlusspunkt 65 mit der Hülse 31a, die mit Spulendrahtenden von zwei Spulen verbunden ist. Danach verläuft der Phasenleiter 51 zu einem weiteren Stromanschlusspunkt 67 mit einer weiteren Hülse 31, die mit Spulendrahtenden von zwei weiteren Spulen verbunden ist. Zwischen dem Stromanschlusspunkt 65 und dem weiteren Stromanschlusspunkt 67 verringert sich der Querschnitt des Phasenleiters 51. Dies erfolgt in der Ausführungsform der Figur 8 mittels eines Querschnittsprungs 57.

Von den weiteren fünf Phasenleitern 52, 53, 54, 55, 56 weisen drei 54, 55, 56 ebenfalls einen Querschnittsprung 58, 59, 60 auf, der zusätzlich auch in Figur 7 gezeigt ist.

Des Weiteren sind die Erhebungen 22 gezeigt, die die elektrische Isolation zwischen den stromführenden Komponenten sicherstellt.

Der Kontaktring 1 in Figur 8 weist außerdem Haltestege 7 mit einer Nase 27 für eine Aufnahme, die auf dem Stator 72 oder auf einer Statorendscheibe ausgebildet ist, auf. Der Kontaktring 1 weist des Weiteren Ausnehmungen 4, 8 auf, die zu einer Gewichtseinsparung führen.

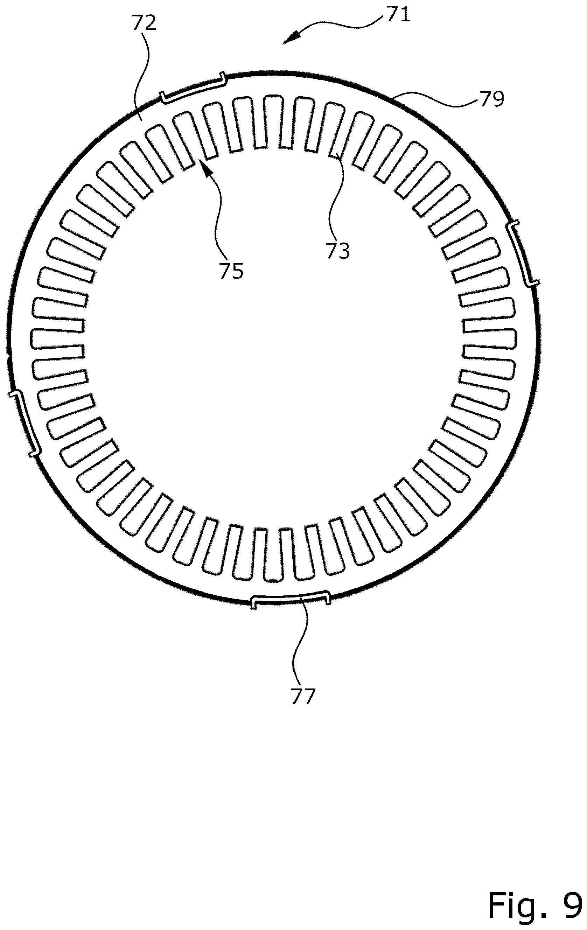

Figur 9 zeigt ein Beispiel einer bereits angesprochenen Statorendscheibe 71 des Blechpakets des Stators 72. Diese Endscheibe stellt die letzte Scheibe das Blechpaket im Stator da. Die Statorendscheibe 71 weist genauso wie alle anderen Scheiben des Blechpakets Zähne 73 und Nuten 75 auf, wobei der Unterschied zu den anderen Scheiben des Blechpaket in einer Ausnehmung oder in einer Aufnahme 77 am äußeren Rand 79 der Statorendscheibe 71 liegt. In diese Aufnahme 77 kann beispielsweise die Nase 27 das Abstützelements 7 des Kontaktrings 1 eingreifen. Eine Vielzahl von Abstützelementen 7 am äußeren Rand des Kontaktrings 1 ermöglichen eine Fixierung des Kontaktrings 1 am Stator 72.

Ebenso ist über die Abstützelemente 7 eine Führung des Kontaktrings 1 in Richtung des Stator 72 möglich, sodass die Endhülsen automatisch in die dafür vorgesehenen Durchführungen eingeführt werden können. Eine Verschweißung der Hülsen ist danach in einfacher Form auf der Oberseite, also der dritten Ebene, auch Phasenebene genannt, des Kontaktringes 1 möglich.

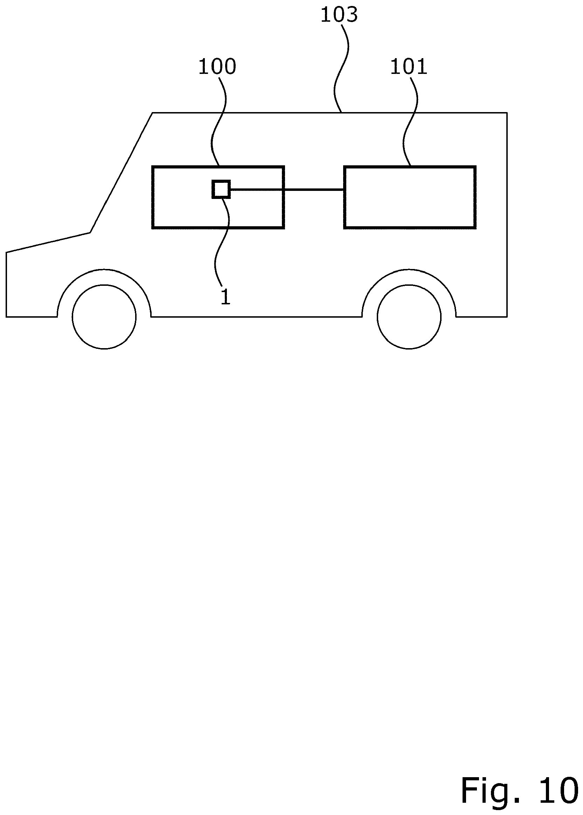

Figur 10 ist eine Prinzipskizze eines Ausführungsbeispiels eines Fahrzeugs 103, beispielsweise eines Hybridfahrzeugs oder eines Elektrofahrzeugs, umfassend eine elektrische Maschine 100 mit einem Ausführungsbeispiel der Kontaktrings 1 zum Antreiben des Fahrzeugs 103.

Ferner ist in Figur 10 auch der Anschluss der Schnittstelle des Kontaktrings 1 an einen Inverter 101 gezeigt.

## Patentansprüche

1. Kontaktring (1) für einen Stator (72) eines Elektromotors (100), wobei der Kontaktring (1) drei Ebenen aufweist:
- eine erste Ebene mit mindestens einem ersten Leiter (17);
- eine zweite Ebene (5) aus elektrisch isolierendem Material;
- eine dritte Ebene mit mindestens einem zweiten Leiter (51, 52, 53, 54, 55, 56);
- mindestens eine erste und eine zweite Durchführung (11, 13, 15) durch die zweite Ebene (5),
**dadurch gekennzeichnet, dass**
die erste Durchführung (13, 15) kleiner als die zweite Durchführung (11) ist und in der ersten Durchführung (13, 15) Spulendrähte einer Spule und in der zweiten Durchführung (11) Spulendrähte mindestens zweier Spulen geführt werden.

2. Kontaktring (1) gemäß Anspruch 1, wobei mindestens ein zweiter Leiter (51, 52, 53, 54, 55, 56) aufrecht auf dem Kontaktring (1) steht.

3. Kontaktring (1) gemäß einer der vorherigen Ansprüche, wobei die Spulendrähte in gecrimpten Hülsen (29, 31) in den Durchführungen (11, 13, 15) geführt werden.

4. Kontaktring (1) gemäß einer der vorherigen Ansprüche, wobei die Spulendrähte oder die Hülsen (29, 31) an den ersten oder zweiten Leiter geschweißt sind.

5. Kontaktring (1) gemäß einer der vorherigen Ansprüche, wobei mindestens ein erster Leiter (17) in Richtung der zweiten Leitern (51, 52, 53, 54, 55, 56) eine Verlängerung (23, 25) aufweist und diese Verlängerung durch die erste Durchführung (13, 15) geführt ist.

6. Kontaktring (1) gemäß einer der vorherigen Ansprüche, wobei die zweite Ebene (5) mindestens eine Halterung (41, 43, 45) für die zweiten Leitern (51, 52, 53, 54, 55, 56) aufweist.

7. Kontaktring (1) gemäß einer der vorherigen Ansprüche, wobei der Kontaktring (1) mindestens ein Abstützelement (7) aufweist, das in Wirkverbindung mit dem Stator (72) oder einer Statorendscheibe (71) des Stators (72) steht.

8. Kontaktring (1) gemäß einer der vorherigen Ansprüche, wobei sich der zweite Leiter (51, 52, 53, 54, 55, 56) von einem Stromanschlusspunkt (65) zu einem weiteren Stromanschlusspunkt (67) im Querschnitt verjüngt oder einen Querschnittsprung (57, 58, 59) aufweist.

9. Kontaktring (1) gemäß einer der vorherigen Ansprüche, wobei die erste Ebene einen kleineren Abstand zum Stator (72) aufweist als die dritte Ebene und die zweite Ebene (5) zwischen der ersten und dritten Ebene angeordnet ist.

10. Fahrzeug (103) mit einem Kontaktring (1) für einen Stator (72) eines Elektromotors (100) gemäß einer der vorherigen Ansprüche.
